(19) Europäisches Patentamt
European Patent Office
Office européen des brevets

(11) **EP 3 791 955 A1**

(12) **EUROPÄISCHE PATENTANMELDUNG**

(43) Veröffentlichungstag:
**17.03.2021 Patentblatt 2021/11**

(21) Anmeldenummer: **19196384.2**

(22) Anmeldetag: **10.09.2019**

(51) Int Cl.:
*B01J 29/76* (2006.01)   *B01J 35/00* (2006.01)
*B01J 35/02* (2006.01)   *B01J 37/00* (2006.01)
*B01J 37/02* (2006.01)   *B01J 29/56* (2006.01)
*B01J 29/83* (2006.01)   *B01J 29/85* (2006.01)
*B01D 53/94* (2006.01)   *B01J 35/04* (2006.01)
*B01J 37/08* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **UMICORE AG & CO. KG**
**63457 Hanau-Wolfgang (DE)**

(72) Erfinder:
• **SEYLER, Michael**
  **63814 Mainaschaff (DE)**
• **BARTH, Benjamin**
  **63755 Alzenau (DE)**

(54) **KUPFER-ZEOLITH- UND KUPFER/ALUMINA-HALTIGES KATALYTISCHES MATERIAL FÜR DIE SCR, ABGASREINIGUNGSVERFAHREN MIT DIESEM MATERIAL UND VERFAHREN ZUR HERSTELLUNG DIESES MATERIALS**

(57)     Die vorliegende Erfindung betrifft ein SCR-aktives Material, das einen kleinporigen Zeolithen, Aluminiumoxid und Kupfer umfasst, dadurch gekennzeichnet, dass es bezogen auf das gesamte Material 5 bis 7 Gew.-% Aluminiumoxid enthält und das Kupfer auf dem Aluminiumoxid in einer ersten Konzentration und auf dem kleinporigen Zeolithen in einer zweiten Konzentration vorliegt.

Fig. 1:

EP 3 791 955 A1

**Beschreibung**

Die vorliegende Erfindung betrifft ein SCR-aktives Material zur Verminderung von Stickoxiden im Abgas von Verbrennungsmotoren.

Abgase von Kraftfahrzeugen mit einem überwiegend mager betriebenen Verbrennungsmotor enthalten neben Partikelemissionen insbesondere die Primäremissionen Kohlenmonoxid CO, Kohlenwasserstoffe HC und Stickoxide $NO_x$. Aufgrund des relativ hohen Sauerstoffgehaltes von bis zu 15 Vol.-% können Kohlenmonoxid und Kohlenwasserstoffe durch Oxidation relativ leicht unschädlich gemacht werden, die Reduktion der Stickoxide zu Stickstoff gestaltet sich jedoch wesentlich schwieriger.

Ein bekanntes Verfahren zur Entfernung von Stickoxiden aus Abgasen in Gegenwart von Sauerstoff ist die selektive katalytische Reduktion (SCR-Verfahren) mittels Ammoniak an einem geeigneten Katalysator. Bei diesem Verfahren werden die aus dem Abgas zu entfernenden Stickoxide mit Ammoniak zu Stickstoff und Wasser umgesetzt. Das als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Als SCR-Katalysatoren können beispielsweise bestimmte metallausgetauschte Zeolithe verwendet werden. Zeolithe werden oftmals nach der Ringgröße ihrer größten Porenöffnungen in groß-, mittel- und kleinporige Zeolithe unterteilt. Großporige Zeolithe weisen eine maximale Ringgröße von 12 und mittelporige Zeolithe eine solche von 10 auf. Kleinporige Zeolithe weisen eine maximale Ringgröße von 8 auf.

Während beispielsweise im Bereich Schwerlastkraftwagen in großem Umfang SCR-Katalysatoren auf Basis von Eisen-ausgetauschten β-Zeolithen, also eines großporigen Zeolithen, verwendet wurden und immer noch werden, gewinnen SCR-Katalysatoren auf Basis kleinporiger Zeolithe zunehmend an Bedeutung, siehe beispielsweise WO 2008/106519 A1, WO 2008/118434 A1 und WO 2008/132452 A2. Dabei standen zuletzt insbesondere SCR-Katalysatoren auf Kupfer-Chabazit-Basis im Fokus.

Die bekannten SCR-Katalysatoren vermögen zwar Stickoxide mit hoher Selektivität mit Ammoniak als Reduktionsmittel zu Stickstoff und Wasser umzusetzen. Ab etwa 350°C setzt jedoch bei Kupfer-Chabazit-basierten Katalysatoren die sogenannte parasitäre Ammoniakoxidation ein und tritt in Konkurrenz zur erwünschten SCR-Reaktion. Hierbei wird das Reduktionsmittel Ammoniak in einer Reihe von Nebenreaktionen mit Sauerstoff zu Distickstoff, Lachgas, Stickstoffmonoxid oder Stickstoffdioxid umgesetzt, so dass entweder das Reduktionsmittel nicht effektiv genutzt wird oder sich sogar aus dem Ammoniak zusätzliche Mengen an Stickoxiden bilden. Besonders ausgeprägt ist diese Konkurrenz bei hohen Reaktionstemperaturen im Bereich von 500 bis 650°C, wie sie bei der Regeneration von Dieselpartikelfiltern (DPF) im Abgasstrang am SCR-Katalysator auftreten können. Des Weiteren muss sichergestellt sein, dass die Katalysatormaterialien alterungsstabil sind, um auch über die gesamte Lebensdauer eines Kraftfahrzeugs hohe Schadstoff-Umsätze erzielen zu können. Um auch bei den Reaktionstemperaturen während einer DPF-Regeneration und über die Lebensdauer hohe Umsätze zu erreichen, besteht also Bedarf an verbesserten SCR-Katalysator-Materialien.

Die WO 2008/132452 A2 beschreibt einen mit zum Beispiel Kupfer ausgetauschten kleinporigen Zeolithen, welcher als Washcoat auf ein passendes monolithisches Substrat beschichtet bzw. zu einem Substrat extrudiert werden kann. Der Washcoat kann einen Binder enthalten, welcher ausgewählt ist aus der Gruppe bestehend aus Aluminiumoxid, Siliziumoxid, (nicht zeolithisches) Siliziumoxid-Aluminiumoxid, natürliche Tonerden, $TiO_2$, $ZrO_2$ und $SnO_2$.

Die WO 2013/060341 A1 beschreibt SCR-aktive Katalysatorkompositionen aus einer physikalischen Mischung eines sauren Zeolithen oder Zeotypen in protonischer Form oder in mit Eisen promotierter Form mit beispielsweise $Cu/Al_2O_3$.

In JH Kwak, R Tonkyn, D Tran, D Mei, SJ Cho, L Kovarik, JH Lee, CHF Peden und J Szanyi: "Size-Dependent Catalytic Performance of CuO on g-Al2O3: NO Reduction versus NH3 Oxidation", ACS Catal 2012, 2, 1432-1440, werden Reaktionswege von Ammoniak auf $CuO/_y$-$Al_2O_3$ während $NH_3$-SCR-Reaktionen beschrieben. Während mit 0,5 Gew.-% $CuO/_y$-$Al_2O_3$ Ammoniak insbesondere mit Stickstoffmonoxid reagierte um Stickstoff zu bilden, reagiert es mit 10 Gew.-% $CuO/_y$-$Al_2O_3$ insbesondere mit Sauerstoff unter Bildung von Stickoxiden.

Die JP 2012-215166 A beschreibt ein Abgasreinigungssystem, bei dem ein Zeolith mit einem Binder vermischt und zu einem zylindrischen Wabenkörper extrudiert wird. Der Zeolith ist vorteilhaft ein Beta- oder ZSM-5-Typ-Zeolith oder eine Phosphat-Typ-Zeolith. ZSM-5 gehört zum Strukturyp MFI. Die Strukturtypen MFI und Beta sind großporige Zeolithe. Vorteilhaft wird ein Phosphat-Typ-Zeolith verwendet, da diese Zeolithe eine hervorragende $NO_x$-Reinigungsleistung aufweisen. Um die Festigkeit des Wabenkörpers zu erhöhen, enthält er vorteilhaft ein oder mehrere Verstärkungsmaterialien, ausgewählt aus Fasern aus Aluminiumoxid, Siliciumdioxid, Siliciumcarbid, Silikoaluminat, Glas, Kaliumtitanat oder Aluminiumborat, wobei Aluminiumoxidfasern bevorzugt sind. Diese Verstärkungsmaterialien werden nach dem Extrudieren des Wabenkörpers auf seiner Außenseite aufgebracht. Der Zeolith kann anschließend durch Eintauchen des Wabenkörpers in eine wässrige Lösung, die Kupfer- oder Eisenionen enthält, ionenausgetauscht werden. Die JP 2012-215166 A macht keine Aussagen darüber, ob bei Ionenaustausch Kupfer- oder Eisenionen bzw. die entsprechenden Kupfer- und Eisenoxide auch auf den Verstärkungsfasern abgelagert werden. Bei den SCR-aktiven Materialien gemäß JP 2012-215166 A handelt es sich um mit Kupfer- oder Eisenionen beladenen, oben genannten Zeolithe.

Die EP 2 985 068 A1 offenbart ein Katalysatorsystem zur Reduktion von Stickoxiden, das einen Stickoxidspeicherkatalysator und einen SCR-Katalysator umfasst. Der SCR-Katalysator enthält dabei eine Washcoatschicht bestehend aus einem kupfer- oder eisenausgetauschten kleinporigen Zeolithen, beispielsweise Chabazit, und Aluminiumoxid. Dabei befinden sich 100 % des Kupfers oder Eisens auf dem kleinporigen Zeolithen und 0 % auf dem Aluminiumoxid.

Die US 2015/0037233 A1 beschreibt einen Ammoniakschlupfkatalysator, bei dem sich geträgertes Palladium zur Oxidation von Kohlenmonoxid und/oder Kohlenwasserstoffen in einer oberen oder stromaufwärts gelegenen Schicht befindet, und sich ein SCR-Katalysator entweder in der oberen Schicht oder in einer separaten unteren oder stromabwärts gelegenen Schicht befindet, und sich ein Ammoniakoxidationskatalysator in einer untersten Schicht befindert. Der SCR-Katalysator umfasst eine Washcoatschicht, die einen kleinporigen Zeolithen (SAPO-34) und Aluminiumoxid enthält. Der Zeolith ist mit Kupfer beladen; das Kupfer befindet sich jedoch nicht auf dem Aluminiumoxid.

Die WO 2018/029328 A1 betrifft ein SCR-aktives Material, das einen kleinporigen Zeolithen, Aluminiumoxid und Kupfer umfasst, wobei es auf das gesamte Material bezogen 5 bis 25 Gew.-% Aluminiumoxid enthält und das Kupfer auf dem Aluminiumoxid in einer ersten Konzentration und auf dem kleinporigen Zeolithen in einer zweiten Konzentration vorliegt. Vorteilhaft ist die Kupferkonzentration auf dem Aluminiumoxid höher als auf dem kleinporigen Zeolithen. Die Gesamtmenge an Kupfer, berechnet als CuO und bezogen auf das gesamte SCR-aktive Material beträgt dabei 1-15 Gew.-%. Die Ausführungsbeispiele der WO 2018/029328 A1 zeigen erfindungsgemäßes SCR-aktives Material, dessen Kupfergehalt an der oberen Grenze des genannten Bereiches liegt. Dieses Material zeigt gegenüber dem Stand der Technik deutlich verbesserte Stickoxidumsätze bei 500°C und bei 650°C. Bei der höheren Temperatur (600°C) ist der Stickoxidumsatz jedoch auch bei den erfindungsgemäßen SCR-Materialien erheblich niedriger als bei der niedrigeren (500°C).

Es besteht daher weiterhin Bedarf nach verbesserten SCR-aktiven Materialien, deren Stickoxidumsatz über einen weiten Temperaturbereich möglichst hoch ist. Die Beladung von Zeolithen mit Übergangsmetallen wie Kupfer und/oder Eisen ist zwingend notwendig, damit diese Zeolithe Stickoxide in der SCR-Reaktion zu Stickstoff und Wasser umsetzen können. Kupfer hat sich hierbei als besonders vorteilhaft erwiesen. Aufgrund des bekannten Standes der Technik würde der Fachmann erwarten, dass ein erhöhter Kupfergehalt zwar zu höherer Aktivität bei hohen Temperaturen, aber zu weniger Selektivität bei niedrigeren Temperaturen führt. Dies wird beispielsweise in I Nova, E Tronconi (Hrsg.): "Urea-SCR Technology for deNOx After Treatment of Diesel Exhausts", Springer-Verlag, New York 2014, Kapitel 7.4.2., S. 206-208 und Kapitel 12.4.1., S. 365-369, gezeigt. Es ist bekannt, dass es vor allem bei niedrigeren (Abgas-)Temperaturen zu unerwünschten Nebenreaktionen, wie beispielsweise der Bildung von Lachgas ($N_2O$) kommen kann. Erwünscht sind daher Katalysatoren, die einerseits sowohl in niedrigen als auch in hohen Temperaturbereichen möglichst aktiv sind, d.h. möglichst viele Stickoxide umsetzen. Andererseits sollen die Katalysatoren gleichzeitig sowohl in hohen als auch in niedrigen Temperaturbereichen möglichst selektiv sein, also Stickoxide (mit Hilfe von Harnstoff oder anderen, Ammoniak freisetzenden Substanzen) möglichst ausschließlich zu Stickstoff und Wasser umsetzen und so wenig wie möglich andere Stickstoffverbindungen, wie beispielsweise $N_2O$, bilden.

Es wurde nun überraschend gefunden, dass bestimmte SCR-Materialien auf Basis eines kleinporigen Zeolithen, Aluminiumoxid und Kupfer die oben genannten Anforderungen erfüllen.

Die vorliegende Erfindung betrifft ein SCR-aktives Material, das einen

(i) kleinporigen Zeolithen,
(ii) Aluminiumoxid und
(iii) Kupfer umfasst,

dadurch gekennzeichnet, dass es bezogen auf das gesamte Material 5 bis 7 Gew.-%, besonders bevorzugt 5 bis 6 Gew.-% Aluminiumoxid enthält und das Kupfer, berechnet als CuO, auf dem Aluminiumoxid in einer ersten Konzentration und auf dem kleinporigen Zeolithen in einer zweiten Konzentration vorliegt, wobei sowohl die erste als auch die zweite Konzentration des Kupfers größer als Null sind.

Überraschend und im Gegensatz zum Stand der Technik wurde gefunden, dass niedrigere Cu-Gehalte zu mehr Aktivität bei niedrigen Temperaturen und zu höherer Selektivität bei höheren Temperaturen führen können.

Der Wortlaut, wonach Kupfer auf dem Zeolithen vorliegt, umfasst im Rahmen der vorliegenden Erfindung das Vorliegen von Kupfer als Teil des Gittergerüstes des Zeolithen, das Vorliegen von Kupfer in Ionen-ausgetauschter Form in Poren des Zeolithgerüstes, sowie jede andere Form, in der Kupfer innerhalb des dreidimensionalen Zeolithgerüstes oder auf dessen Oberfläche gebunden sein kann.

Ebenso umfasst der Wortlaut, wonach Kupfer auf dem Aluminiumoxid vorliegt, alle Formen in denen Kupfer innerhalb des dreidimensionalen Aluminiumoxidgerüstes oder auf dessen Oberfläche gebunden sein kann. Dies schließt auch Mischoxide ein, wie z.B. Kupferaluminat ($CuAl_2O_4$).

Der Begriff Kupfer umfasst in jedem Fall sowohl metallisches Kupfer, als auch Kupfer in Ionenform, als auch Kupferoxid.

Ferner umfasst im Rahmen der vorliegenden Erfindung der Begriff "Aluminiumoxid" nicht den Anteil an Aluminiumoxid im Zeolithgitter des Zeolithen. "Aluminiumoxid" umfasst also nur die Komponente gemäß (ii) und nicht den Anteil an Aluminiumoxid, welcher sich aus dem $SiO_2/Al_2O_3$ Verhältnis (SAR) des Zeolithen ergibt.

Hierbei ist zu berücksichtigen, dass die bevorzugte Menge an Kupfer im Verhältnis zum Zeolithen abhängig ist vom $SiO_2/Al_2O_3$-Verhältnis des Zeolithen. Im Allgemeinen gilt, dass mit zunehmenden $SiO_2/Al_2O_3$-Verhältnis des Zeolithen die Menge an austauschbarem Kupfer abnimmt. Das bevorzugte Atomverhältnis von im Zeolithen eingetauschten Kupfer zu Aluminium im Zeolithen, nachfolgend als Cu/Al-Verhältnis bezeichnet, liegt erfindungsgemäß insbesondere bei 0,25 bis 0,6.

Dies entspricht einem theoretischen Austauschgrad des Kupfers mit dem Zeolithen von 50% bis 120%, ausgehend von einem vollständigen Ladungsausgleich im Zeolithen durch zweiwertige Cu-Ionen bei einem Eintauschgrad von 100%. Besonders bevorzugt sind Cu/Al-Werte von 0,30-0,5, was einem theoretischen Cu-Austauschgrad von 60-100% entspricht.

Das Cu/Al-Verhältnis ist eine weit verbreitete Größe zur Charakterisierung von mit Kupfer ausgetauschten Zeolithen, siehe zum Beispiel WO 2008/106519 A1; C Torre-Abreu, C Henriques, FR Ribeiro, G Delahay und MF Ribeiro: "Selective catalytic reduction of NO on copper-exchanged zeolites: the role of the structure of the zeolite in the nature of copper-active sites", Catal Today 1999, 54, 407-418; ST Korhonen, DW Fickel, RF Lobo, BM Weckhuysen und AM Beale: "Isolated Cu2+ ions: active sites for selective catalytic reduction of NO", Chem Commun 2011,47, 800-802; Q Guo, F Fan, DAJ Michel Ligthart, G Li, Z Feng, EJM Hensen und C Li: "Effect of the Nature and Location of Copper Species on the Catalytic Nitric Oxide Selective Catalytic Reduction Performance of the Copper/SS-13 Zeolite", Chem-CatChem 2014, 4, 634-639. Der Fachmann ist somit mit dieser Größe vertraut.

Das Cu/Al-Verhältnis kann zum Beispiel mittels optischer Emissionsspektrometrie mit induktiv gekoppeltem Plasma (ICP-OES) bestimmt werden. Diese Methode ist dem Fachmann bekannt.

Es ist besonders vorteilhaft, wenn die erste Konzentration (die Konzentration des Kupfers auf dem Aluminiumoxid) höher ist als die zweite Konzentration (die Konzentration des Kupfers auf dem Zeolithen), wobei sowohl die erste als auch die zweite Konzentration des Kupfers größer als Null sind. Bevorzugt ist die erste Konzentration mindestens 1,5 Mal, besonders bevorzugt mindestens 2 Mal, höher als die zweite Konzentration.

Beispielsweise ist die erste Konzentration 1,5 bis 20 Mal oder 2 bis 15 Mal höher als die zweite Konzentration. Das Verhältnis der ersten und zweiten Konzentration kann mit Hilfe von Transmissionselektronenspektroskope (TEM) und energiedispersiver Röntgenspektroskopie (EDX) bestimmt werden. Hierzu wird ein Dünnschnitt des erfindungsgemäßen SCR-aktiven Materials angefertigt und mit Hilfe der EDX die Konzentration an Kupfer in Bereichen des Zeolithen und in Bereichen des Aluminiumoxids ermittelt und ins Verhältnis gesetzt. Dieses Verfahren ist dem Fachmann bekannt und in der Literatur beschrieben.

In einer Ausführungsform ist das erfindungsgemäße SCR-aktive Material frei von Edelmetallen wie zum Beispiel Platin, Palladium und Rhodium.

Die kleinporigen Zeolithe sind beispielsweise Aluminosilikate. Alle dem Fachmann bekannten Zeolithe dieser Art können verwendet werden. Dazu gehören natürlich vorkommende, bevorzugt aber synthetisch hergestellte kleinporige Zeolithe.

Beispiele für synthetisch hergestellte kleinporige Zeolithe gehören den Strukturtypen ABW, ACO, AEI, AEN, AFN, AFT, AFX, ANA, APC, APD, ATN, ATT, ATV, AWO, AWW, BIK, BRE, CAS, CDO CHA, DDR, DFT, EAB, EDI, EPI, ERI, ESV, GIS, GOO, IHW, ITE, ITW, JBW, KFI, LEV, LTA, LTJ, MER, MON, MTF, NSI, OWE, PAU, PHI, RHO, RTE, RTH, SAS, SAT, SAV, SIV, THO, TSC, UEI, UFI, VNI, YUG und ZON an.

Bevorzugte kleinporige Zeolithe sind solche, die den Strukturtypen AEI, CHA (Chabazit), ERI (Erionit), LEV (Levyne), AFX, DDR und KFI bzw. solche, die den Strukturtypen AEI, CHA (Chabazit), ERI (Erionit), AFX, DDR und KFI angehören. Besonders bevorzugt sind die Strukturtypen CHA, AEI, ERI und LEV bzw. die Strukturtypen CHA, AEI und ERI. Ganz besonders bevorzugt sind die Strukturtypen CHA und LEV bzw. CHA.

In Ausführungsformen der vorliegenden Erfindung weisen die kleinporigen Zeolithe vom Aluminosilikat-Typ einen SAR-Wert von 5 bis 50 auf, bevorzugt von 14 bis 40, besonders bevorzugt zwischen 20 und 35.

Im Rahmen der vorliegenden Erfindung fallen unter den Begriff Zeolith nicht nur die oben beschriebenen Aluminosilikate, sondern auch sogenannte Zeolith-ähnliche Materialien vom Typ der Silicoaluminophosphate und Aluminophosphate. Aluminophosphate sind dem Fachmann als sog. "AlPOs" bekannt. Sie besitzen alle dieselbe chemische Zusammensetzung $AlPO_4$ und weisen Gerüststrukturen mit mikroporösen Kavitäten auf. Die Gerüststrukturen werden dabei aus alternierenden $AlO_4$- und $PO_4$-Tetraedern gebildet. Silicoaluminophosphate sind dem Fachmann als sog. "SAPOs" bekannt. SAPOs besitzen ein tetraedrisches oxidisches Grundgerüst, das Silicium, Aluminium und Sauerstoff enthält. Mechanistisch betrachtet, kann die Zusammensetzung der SAPOs als Siliciumsubstitution in einem hypothetischen Aluminiumphosphat-Grundgerüst angesehen werden. SAPOs und deren Aufbau und Zusammensetzung sind dem Fachmann bekannt.

Geeignete Silicoaluminophosphate bzw. Aluminophosphate gehören insbesondere ebenfalls den Strukturtypen AEI, CHA (Chabazit), ERI (Erionit), LEV (Levyne), AFX, DDR und KFI an. Solche Materialien können unter dem entsprechenden Three-Letter-Code der Structure Database der International Zeolite Association unter Related Materials entnommen werden (http://www.iza-structure.org/databases/).

Beispiele sind SAPO-17, SAPO-18, SAPO-34, SAPO-35, SAPO-39, SAPO-43, SAPO-47 und SAPO-56 bzw. AlPO-17, AlPO-18, AlPO-34 und AlPO-35. Für diese Materialien sind die oben erwähnten bevorzugten SAR Werte von Aluminosilikaten nicht zutreffend.

Im Rahmen der vorliegenden Erfindung sind kleinporige Zeolite vom Aluminosilikat-Typ bevorzugt.

Die mittlere Kristallitgröße ($d_{50}$) des kleinporigen Zeolithen beträgt beispielsweise 0,1 bis 20 $\mu$m, bevorzugt 0,5-10 $\mu$m, besonders bevorzugt 1-4 $\mu$m.

Als Aluminiumoxid kommt insbesondere Aluminiumoxid mit einer BET-Oberfläche von 30 bis 250 m$^2$/g, bevorzugt von 100 bis 200 m$^2$/g (bestimmt nach ISO 9277) in Frage. Solche Materialien sind dem Fachmann bekannt und am Markt erhältlich.

Daneben kommen Aluminiumoxide in Frage, die mit weiteren Elementen dotiert sind, um die physikalischen bzw. chemischen Eigenschaften zu verbessern. Bekannte Elemente sind beispielsweise Si, Mg, Y, La und Elemente der Lanthanide, wie z.B. Ce, Pr, Nd, die mit dem Aluminium Mischoxidverbindungen eingehen können und so beispielsweise die Acidität bzw. Oberflächenstabilität verändern können. Die Dotierung des Aluminiumoxids mit einem oder mehreren Elementen sollte kleiner 15 Gew.-% betragen bezogen auf das jeweilige Mischoxid, bevorzugt kleiner 10 Gew.-%, besonders bevorzugt kleiner 5 Gew.-%.

Die Aluminiumoxide können als solche verwendet werden, wobei es aber bevorzugt ist, das Aluminiumoxid im Rahmen der Herstellung des SCR-aktiven Materials aus einer geeigneten Vorstufe, wie z.B. einem Boehmit oder einem Aluminiumsalz, wie z.B. Aluminiumnitrat, zu bilden.

In einer Ausführungsform der vorliegenden Erfindung liegt das SCR-aktive Material in einer Form vor, bei der der kleinporige Zeolith einen Kern und das Aluminiumoxid eine diesen Kern umhüllende Schale bildet. Solche Strukturen sind als Core-Shell-Strukturen bekannt und beispielsweise in WO 2012/117042 A2 beschrieben.

In einer Ausführungsform der vorliegenden Erfindung liegt das SCR-aktive Material als Pulver vor.

In einer anderen Ausführungsform der vorliegenden Erfindung liegt das SCR-aktive Material in Form einer Beschichtungssuspension vor, die

a) ein SCR-aktives Material, das einen

(i) kleinporigen Zeolithen,
(ii) Aluminiumoxid und
(iii) Kupfer umfasst,

wobei es bezogen auf das gesamte Material 5 bis 7 Gew.-% Aluminiumoxid enthält und das Kupfer, berechnet als CuO, auf dem Aluminiumoxid in einer ersten Konzentration und auf dem kleinporigen Zeolithen in einer zweiten Konzentration vorliegt, wobei sowohl die erste als auch die zweite Konzentration des Kupfers größer als Null sind, und b) Wasser

umfasst.

In einer Ausführungsform enthält die erfindungsgemäße Beschichtungssuspension 20 bis 55 Gew.-% des SCR-aktiven Materials und 45 bis 80 Gew.-% Wasser, jeweils bezogen auf das Gewicht der Beschichtungs-suspension. In einer anderen Ausführungsform enthält die erfindungsgemäße Beschichtungssuspension 30 bis 50 Gew.-% des SCR-aktiven Materials und 50 bis 70 Gew.-% Wasser, jeweils bezogen auf das Gewicht der Beschichtungssuspension.

Das erfindungsgemäße SCR-aktive Material kann zum Beispiel dadurch hergestellt werden, dass eine wässrige Suspension aus kleinporigem Zeolith, Kupfersalz und Aluminiumoxid bzw. einer Vorläuferverbindung von Aluminiumoxid getrocknet und anschließend kalziniert wird.

Beispielsweise wird ein kleinporiger Zeolith in Wasser vorgelegt, unter Rühren ein lösliches Kupfersalz zugegeben und anschließend das Aluminiumoxid oder eine entsprechende Aluminiumoxid-Vorstufe dazugegeben. Die so erhaltene Suspension des erfindungsgemäßen SCR-aktiven Materials in Wasser kann direkt als Beschichtungssuspension verwendet werden. Sie kann aber auch filtriert und/oder getrocknet werden, wobei im letztgenannten Fall das erfindungsgemäße SCR-aktive Material in Pulverform erhalten wird.

Ebenso ist es beispielsweise möglich, nach der Trocknung und Kalzinierung der wässrige Suspension aus dem kleinporigen Zeolithen, dem Aluminiumoxid bzw. der Aluminiumoxidvorläuferverbindung und des Kupfersalzes, das erhaltene Material erneut mit Aluminiumoxid oder einer entsprechende Aluminiumoxid-Vorstufe in wässriger Lösung zu suspendieren, erneut zu trocknen und zu kalzinieren und so das erfindungsgemäße SCR-aktive Material in Pulverform herzustellen.

Aus dem SCR-aktiven Material in Pulverform kann die erfindungsgemäße Beschichtungssuspension in einfacher Weise durch Zugabe von Wasser unter Rühren und gegebenenfalls Mahlen erhalten werden.

Bevorzugte lösliche Kupfersalze sind Salze, die in Wasser löslich sind wie z.B. Kupfersulfat, Kupfernitrat und Kupferacetat. Besonders bevorzugt sind Kupfernitrat und Kupferacetat, ganz besonders bevorzugt Kupferacetat.

Die Art der Trocknung kann nach unterschiedlichen Verfahren erfolgen. So sind dem Fachmann Sprühtrocknung, Mikrowellentrocknung, Band-trocknung, Walzentrocknung, Kondensationstrocknung, Trommeltrocknung, Gefriertrocknung und Vakuumtrocknung bekannt. Bevorzugt sind Sprühtrocknung, Bandtrocknung, Walzentrocknung und Gefriertrocknung. Besonders bevorzugt ist die Sprühtrocknung. Dabei wird mittels eines-Zerstäubers die Suspension in einen Heißgasstrom eingebracht, der es in sehr kurzer Zeit (wenige Sekunden bis Bruchteilen einer Sekunde) zu dem SCR-aktiven Material trocknet. Gegebenenfalls wird das Material anschließend zum Beispiel bei Temperaturen von 500°C - 900°C in Luft oder einem Luft/Wassergemisch kalziniert. Bevorzugt erfolgt die Kalzinierung bei Temperaturen zwischen 550°C - 850°C, ganz besonders bevorzugt bei 600°C -750°C.

In einer weiteren Ausführungsform der vorliegenden Erfindung ist es beispielsweise möglich, nach dem Waschen und der Trocknung und gegebenenfalls Kalzinierung der wässrige Suspension aus dem kleinporigen Zeolithen und des Kupfersalzes (bzw. einen bereits mit Kupfer synthetisierten Zeolithen), das so erhaltene Material anschließend mit Aluminiumoxid oder einer entsprechende Aluminiumoxid-Vorstufe in wässriger Lösung zu suspendieren, erneut zu trocknen und zu kalzinieren und so das erfindungsgemäße SCR-aktive Material herzustellen. Dieses Material kann anschließend erneut in Wasser suspendiert, gegebenenfalls gemahlen, mit Binder versehen und beschichtet werden.

Als Binder zur Beschichtung von Durchflusssubstraten können beispielsweise $Al_2O_3$, $SiO_2$, $TiO_2$ oder $ZrO_2$ bzw. deren Vorstufen, ebenso wie deren Mischungen verwendet werden. Üblicher Weise werden bei der Beschichtung von Filtersubstraten keine Binder benötigt.

Zu Zwecken der Klarheit sei hier darauf verwiesen, dass sich das Aluminiumoxid bzw. die Aluminiumoxidvorstufe zur Herstellung des erfindungsgemäßen SCR-aktiven Materials dadurch von aluminiumhaltigen Bindermaterialien unterscheidet, dass:

1. es bereits bei der Herstellung des SCR-aktiven Materials eingesetzt wird und nicht erst zur Verbesserung der Haftfestigkeit des katalytisch aktiven Materials auf einem Durchflusssubstrat,

2. ein Teil des Kupfers auf dem Aluminiumoxid vorliegt,

3. das SCR-aktive Material, welches das Aluminiumoxid bzw. die Aluminiumoxidvorstufe enthält, kalziniert wird, bevor es auf ein Substrat beschichtet wird, wodurch die typischen Bindereigenschaften verloren gehen,

4. das Aluminiumoxid auch zur Herstellung des erfindungsgemäßen SCR-aktiven Materials eingesetzt wird, wenn die porösen Wände eines Filtersubstrate beschichtet werden sollen (z.B. bei einer in-Wand-Beschichtung eines Wandflussfilters), um die thermische Stabilität des katalytisch aktiven Materials zu erhöhen. Der Einsatz eines Binders ist in diesem Fall nicht notwendig, da die Bindereigenschaften des Binders nicht benötigt werden, wenn das katalytisch aktive Material in den Poren des Filters sitzt. Der zusätzlich zugefügte Binder würde ferner zu einer unerwünschten Erhöhung des Gegendrucks über dem Filter führen, wenn ansonsten die Menge des beschichteten katalytisch aktiven Materials gleich bleiben würde,

5. zur Erhöhung des $NO_x$-Umsatzes nach thermischer Alterung des erfindungsgemäßen SCR-aktiven Materials beiträgt und nicht als katalytisch inaktiv gilt.

Dabei kann das erfindungsgemäße SCR-aktive Material einen oder mehrere bzw. alle der oben genannten Punkte erfüllen.

In Ausführungsformen der vorliegenden Erfindung liegt das erfindungsgemäße SCR-aktive Material in Form einer Beschichtung auf einem Trägersubstrat vor.

Trägersubstrate können sogenannte Durchflusssubstrate oder auch Wandflussfilter sein. Sie können beispielsweise aus Silicium-Carbid, Aluminium-Titanat, Cordierit oder Metall bestehen. Sie sind dem Fachmann bekannt und am Markt erhältlich.

Das Aufbringen des erfindungsgemäßen SCR-aktiven Materials auf das Trägersubstrat kann nach dem Fachmann geläufigen Methoden erfolgen, so etwa nach den üblichen Tauchbeschichtungsverfahren bzw. Pump- und Saug-Beschichtungsverfahren mit sich anschließender thermischer Nachbehandlung (Kalzination).

In einer weiteren Ausführungsform handelt es sich bei dem Trägersubstrat, welches mit dem erfindungsgemäßen SCR-aktiven Material beschichtet ist, um ein gewelltes, monolithisches Substrat (sog. "corrugated substrate"). Das Substrat hat eine Wandstärke von mindestens 50 g/l und maximal 300 g/l sowie eine Porosität von mindestens 50 %. Bei dem Substratmonolithen handelt es sich um ein Papier aus Glas mit hohem Siliciumdioxidgehalt oder ein Papier aus E-Glasfaser. Das Papier ist mit einer Schicht aus Kieselerde oder mit einer Schicht aus Titandioxid beschichtet, und bei dem Katalysator handelt es sich um das SCR-aktive Material gemäß der vorliegenden Erfindung. Dieser gewellte Substratmonolith hat den Vorteil, dass das SCR-aktive Material während Start und Stopp des Verbrennungsmotors nicht abblättert. Das SCR-aktive Material wird auf einen Substratmonolithen aufgebracht, der die Form einer Wellplatte oder einer ebenen Platte hat. Das Substrat besteht aus E-Glasfaser oder aus Glasplatten mit hohem Siliciumgehalt, die mit einer Schicht aus Titandioxid oder Kieselerde beschichtet sind. Das Glas mit hohem Siliciumgehalt enthält 94-95 Gew.-% $SiO_2$, 4-5 Gew.-% $Al_2O_3$ und etwas $Na_2O$. Diese Faser haben eine Dichte von 2.000 bis 2.200 g/l und einen Faserdurchmesser von 8 bis 10 μm. Beispielhaft für diese Substrate sei die kommerziell erhältliche SILEX-Stapelfaser genannt. Die E-Glasfaser enthält 52-56 Gew.-% $SiO_2$, 12-16 Gew.-% $Al_2O_3$, 5-10 Gew.-% $B_2O_3$, 0-1.5 Gew.-% $TiO_2$, 0-5 Gew.-% MgO, 16-25 Gew.-% CaO, 0-2 Gew.-% $K_2O/Na_2O$ und 0-0.8 Gew.-% $Fe_2O_3$. Das Substratmaterial wird derart gewählt, dass seine Dichte mindestens 50 g/l und höchstens 300 g/l beträgt, und die Porosität der Substratwand beträgt mindestens 50 % des Materialvolumens. Die Porosität des Substratmonolithen ergibt sich aufgrund der in ihm enthaltenen Poren, die eine Tiefe von 50 bis 200 μm und einen Durchmesser von 1 bis 30 μm aufweisen. Bei dem SCR-katalytisch aktiven Material handelt es sich um ein SCR-aktives Material gemäß der vorliegenden Erfindung. Es wird in Form einer Schicht mit einer Schichtdicke von 10 bis 150 μm auf das Substrat aufgebracht. Das Aufbringen erfolgt durch Eintauchen des Monolithsubstraten in eine wässrige Aufschlämmung, welche feine Partikel des erfindungsgemäßen SCR-aktiven Materials, mindestens einen Binder und ein Antischaummittel enthält. Die Binder werden wie oben beschrieben ausgewählt. Vorteilhaft handelt es sich bei dem mindestens einen Binder um ein Kieselgel und bei dem Antischaummittel um ein Silicon-Antischaummittel. Die feinen Partikel des erfindungsgemäßen SCR-aktiven Materials haben dabei einen Durchmesser von maximal 50 μm. Das beschichtete Substrat wird dann getrocknet und anschließend bei 400 bis 600°C calciniert, bevorzugt bei 540 bis 560°C, besonders bevorzugt bei 550°C. Ein Katalysatorelement (auch "Brick" genannt) enthält Schichten gewellter Platten, die durch ebene Platten voneinander getrennt sind. Die Katalysatorelemente können in Form rechteckiger Schachteln oder als Zylinder vorliegen. Gewellte Substratmonolithe und ihre Herstellung sind in WO 2010/066345 A1 beschrieben, und die dort beschriebene Lehre kann auf die vorliegende Erfindung angewendet werden, ohne den Schutzbereich der Patentansprüche zu verlassen.

Dem Fachmann ist bekannt, dass im Falle von Wandflussfiltern deren durchschnittliche Porengröße und die mittlere Teilchengröße des erfindungs-gemäßen SCR-aktiven Materials so aufeinander abgestimmt werden können, dass die resultierende Beschichtung auf den porösen Wänden, die die Kanäle des Wandflussfilters bilden, liegt (auf-Wand-Beschichtung). Bevorzugt werden aber durchschnittliche Porengröße und mittlere Teilchen-größe so aufeinander abgestimmt, dass sich das erfindungsgemäße SCR-aktive Material in den porösen Wänden, die die Kanäle des Wandflussfilters bilden, befindet, dass also eine Beschichtung der inneren Porenoberflächen erfolgt (in-Wand-Beschichtung). In diesem Fall muss die mittlere Teilchen-größe des erfindungsgemäßen SCR-aktiven Materials klein genug sein, um in die Poren des Wandflussfilters einzudringen.

Die vorliegende Erfindung betrifft auch Ausführungsformen, in denen das SCR-aktive Material mittels einer Matrixkomponente zu einem Substrat extrudiert wurde. Das Trägersubstrat wird in diesem Fall aus einer inerten Matrixkomponente und dem erfindungsgemäßen SCR-aktiven Material gebildet.

Trägersubstrate, Durchflusssubstrate ebenso wie Wandflussfilter, die nicht nur aus inertem Material, wie beispielsweise Cordierit bestehen, sondern die daneben auch ein katalytisch aktives Material enthalten, sind dem Fachmann bekannt. Zu ihrer Herstellung wird eine Mischung aus beispielsweise 10 bis 95 Gew.-% inerter Matrixkomponente und 5 bis 90 Gew.-% katalytisch aktiven Materials nach an sich bekannten Verfahren extrudiert. Als Matrixkomponenten können dabei alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

Die extrudierten Trägersubstrate, die erfindungsgemäßes SCR-aktives Material umfassen, können als solche zur Abgasreinigung verwendet werden. Sie können aber auch wie inerte Trägersubstrate auch nach üblichen Verfahren mit weiteren katalytisch aktiven Materialien beschichtet werden.

Das erfindungsgemäße SCR-aktive Material liegt aber bevorzugt nicht als Extrudat vor, insbesondere nicht als Extrudat, das ausschließlich aus dem erfindungsgemäßen SCR-aktive Material besteht, das heißt, das keine Matrixkomponente enthält.

Das erfindungsgemäße SCR-aktive Material kann mit Vorteil zur Reinigung von Abgas von mager betriebenen Verbrennungsmotoren, insbesondere von Dieselmotoren, verwendet werden. Es setzt im Abgas enthaltene Stickoxide in die unschädlichen Verbindungen Stickstoff und Wasser um.

Die vorliegende Erfindung betrifft demnach auch ein Verfahren zur Reinigung von Abgas von mager betriebenen Verbrennungsmotoren, das dadurch gekennzeichnet ist, dass das Abgas über ein erfindungsgemäßes SCR-aktives Material geleitet wird.

In der Regel geschieht diese Überleitung in Gegenwart eines Reduktionsmittels. Als Reduktionsmittel wird bei dem erfindungsgemäßen Verfahren bevorzugt Ammoniak verwendet. Der benötigte Ammoniak kann beispielsweise im Abgassystem anströmseitig zum erfindungsgemäßen Partikelfilter etwa mittels eines anströmseitigen Stickoxidspeicherkatalysators ("lean $NO_x$ trap - LNT) gebildet werden, insbesondere im Betrieb unter fetten (rich) Abgasbedingungen. Dieses Verfahren ist als "passive SCR" bekannt.

Ammoniak kann aber auch im "active SCR-Verfahren" in Form wässriger Harnstofflösung mitgeführt werden, die bedarfsgerecht über einen Injektor anströmseitig zum erfindungsgemäßen Partikelfilter eindosiert wird.

Die vorliegende Erfindung betrifft somit auch eine Vorrichtung zur Reinigung von Abgas von mager betriebenen Verbrennungsmotoren, die dadurch gekennzeichnet ist, dass sie ein erfindungsgemäßes SCR-aktives Material, bevorzugt in Form einer Beschichtung auf einem inerten Trägermaterial, sowie ein Mittel zur Bereitstellung eines Reduktionsmittels umfasst.

In der Regel wird als Reduktionsmittel Ammoniak verwendet. In einer Ausführungsform der erfindungsgemäßen Vorrichtung ist das Mittel zur Bereitstellung eines Reduktionsmittels somit ein Injektor für wässrige Harnstofflösung. Der Injektor wird in der Regel mit wässrige Harnstofflösung gespeist, die aus einem mitgeführten Reservoir, also zum Beispiel einem Tankbehälter stammt.

In einer anderen Ausführungsform ist das Mittel zur Bereitstellung eines Reduktionsmittels ein Stickoxidspeicher-Katalysator, der in der Lage ist, aus Stickoxid Ammoniak zu bilden. Solche Stickoxidspeicher-Katalysatoren sind dem Fachmann bekannt und in der Literatur umfassend beschrieben.

Beispielsweise aus SAE-2001-01-3625 ist bekannt, dass die SCR-Reaktion mit Ammoniak schneller verläuft, wenn die Stickoxide in einer 1:1 Mischung aus Stickstoffmonoxid und Stickstoffdioxid vorliegen oder jedenfalls diesem Verhältnis nahekommen. Da das Abgas von mager betriebenen Verbrennungsmotoren in der Regel einen Überschuss von Stickstoffmonoxid gegenüber Stickstoffdioxid aufweist, schlägt das Dokument vor, den Anteil an Stickstoffdioxid mit Hilfe eines Oxidationskatalysators zu erhöhen.

In einer Ausführungsform umfasst die erfindungsgemäße Vorrichtung somit auch einen Oxidationskatalysator. In Ausführungsformen der vorliegenden Erfindung wird als Oxidationskatalysator Platin auf einem Trägermaterial verwendet.

Als Trägermaterial für das Platin kommen alle dem Fachmann für diesen Zweck geläufigen Materialien in Betracht. Sie weisen eine BET-Oberfläche von 30 bis 250 m2/g, bevorzugt von 100 bis 200 m2/g auf (bestimmt nach ISO9277) und sind insbesondere Aluminiumoxid, Siliziumoxid, Magnesiumoxid, Titanoxid, Zirkonoxid, Ceroxid sowie Mischungen oder Mischoxide aus mindestens zwei dieser Oxide.

Bevorzugt sind Aluminiumoxid und Aluminium/Silizium-Mischoxide. Sofern Aluminiumoxid verwendet wird, so ist es besonders bevorzugt stabilisiert, beispielsweise mit Lanthanoxid.

Die erfindungsgemäße Vorrichtung ist beispielsweise so aufgebaut, dass in Strömungsrichtung des Abgases zuerst der Oxidationskatalysator, dann der Injektor für wässrige Harnstofflösung und dann das erfindungsgemäße SCR-aktive Material, bevorzugt in Form einer Beschichtung auf einem inerten Trägermaterial, angeordnet sind.

Alternativ sind in Strömungsrichtung des Abgases zuerst ein Stickoxidspeicher-Katalysator und dann das erfindungsgemäße SCR-aktive Material, bevorzugt in Form einer Beschichtung auf einem inerten Trägermaterial, angeordnet. Bei der Regeneration des Stickoxidspeicher-Katalysators kann unter reduktiven Abgasbedingungen Ammoniak gebildet werden. Oxidationskatalysator und Injektor für wässrige Harnstofflösung sind in diesem Fall entbehrlich.

Das erfindungsgemäße SCR-aktive Material weist in überraschender Weise Vorteile im Vergleich zu herkömmlichen Kupfer-ausgetauschten kleinporigen Zeolithen auf. Insbesondere zeichnet es sich durch höhere Stickoxidumsätze bei Reaktionstemperaturen zwischen 500 und 650°C aus.

Die Erfindung wird in den nachstehenden Beispielen und Figuren näher erläutert.

## Beschreibung der Zeichnungen

Fig. 1 zeigt ein TEM-Bild eines erfindungsgemäßen Materials EM-2.

| | |
|---|---|
| Mikroskop: | JEOL 2010 F |
| Präparation: | iso-Propanol/Wasser |
| Acc.: | 200 kV |
| El. Mag: | 60.000 x |

Fig. 2 zeigt ein TEM-Bild eines Vergleichsmaterials EM-1.

El. Mag:     500.000 x

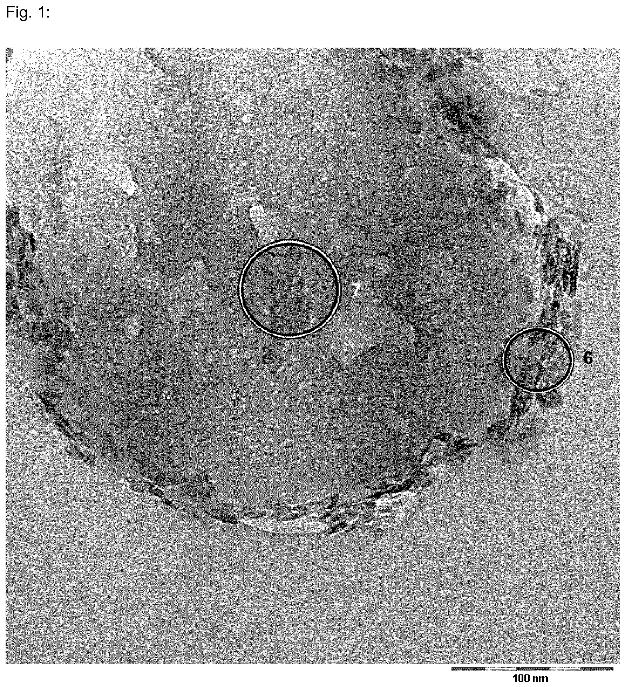

Alle anderen Versuchsbedingungen waren mit den für Fig. 1 beschriebenen identisch.

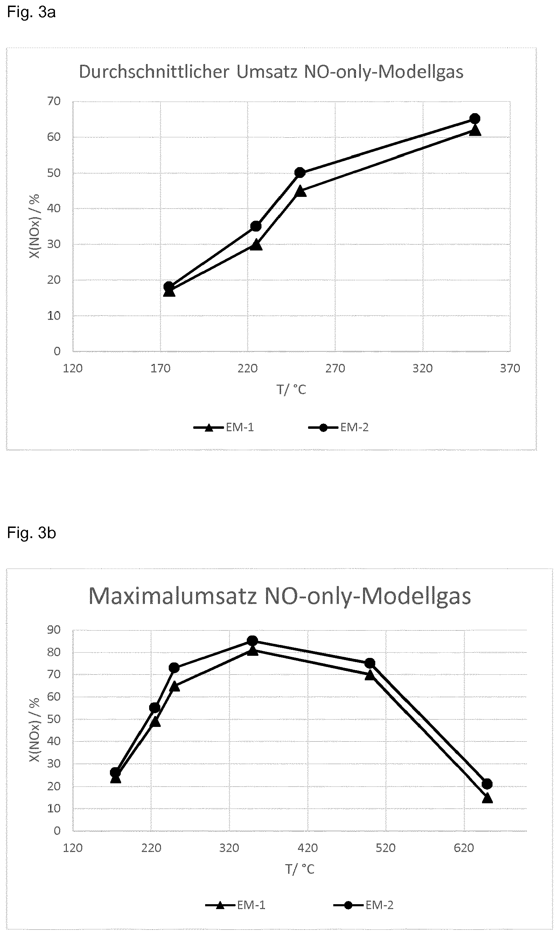

Fig. 3: Der durchschnittliche Umsatz für das NO-only-Modellgas ist in Fig. 3a und der Maximalumsatz in Fig. 3b dargestellt.

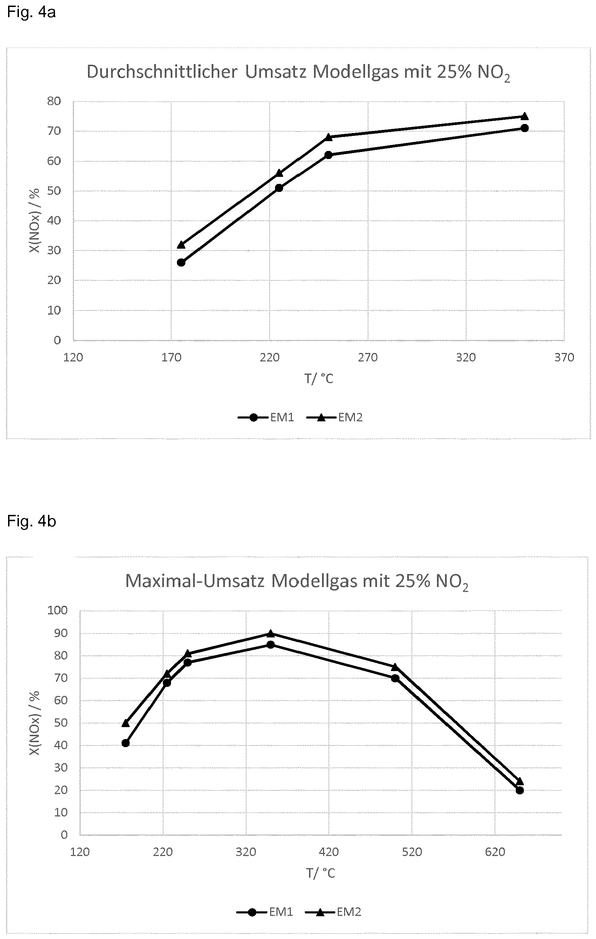

Fig. 4: Der durchschnittliche Umsatz für das Modellgas mit 25% $NO_2$ ist in Fig. 4a und der Maximalumsatz in Fig. 4b dargestellt.

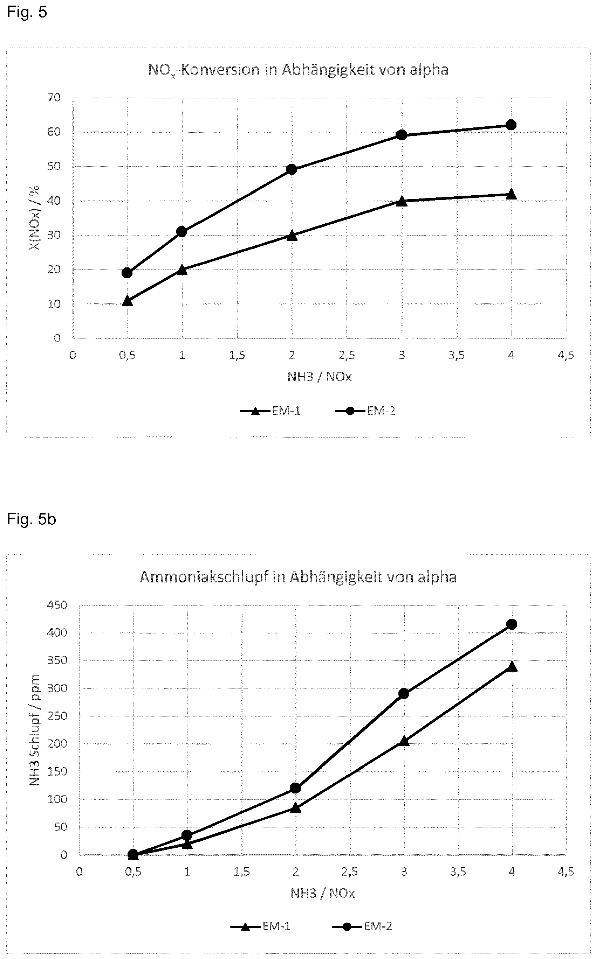

Fig. 5: Die $NO_x$-Konversionsraten bei verschiedenen alpha-Werten sind in Fig. 5a und die zugehörigen Ammoniakschlupfwerte in Fig. 5b dargestellt.

**Ausführungsbeispiele**

**Ausführungsbeispiel 1: Herstellung eines erfindungsgemäßen Materials EM-2**

a) Herstellung des erfindungsgemäßen Materials EM-2

87,9 Gramm Kupfer(II)-acetat-1-hydrat und 955 Gramm Ammonium-chabazit mit einem $SiO_2/Al_2O_3$-Verhältnis von 30 werden in 2500 Gramm Wasser aufgeschlämmt. Die erhaltene Suspension wird für 2 Stunden gerührt. Anschließend werden 300 Gramm eines Boehmit-Sols mit einem Gehalt von 20 Gewichtsprozent $Al_2O_3$ zugesetzt. Danach wird wieder für 2 Stunden gerührt.
Die fertige Suspension wird in einem Sprühtrockner in ein trockenes Pulver überführt, welches anschließend für 2 Stunden bei 500°C unter Luft kalziniert wird.

b) Charakterisierung der Cu-Verteilung von EM-2 zwischen Zeolith und Aluminiumoxid

Das gemäß Schritt a) erhaltene Material EM-2 wird fein verteilt in ein Polymerharz eingebettet. Dann werden Dünnschnitt-Proben angefertigt und im Transmissionselektronenmikroskop untersucht. Ein beispielhaftes TEM-Bild des Materials ist in Abbildung 1 dargestellt. Die Bereiche des Aluminiumoxid und des Zeolithen können anhand des per EDX bestimmten Aluminium-Gehalts und anhand der Morphologie deutlich unterschieden werden. Es zeigt einen Ausschnitt eines Zeolithkristalliten mit einer Hülle aus Aluminiumoxid. In der Aufnahme wurden 2 Bereiche markiert, um die Unterschiede zwischen den Aluminiumoxidbereichen (Bereich 6) und dem Zeolithbereich (Bereich 7) darzustellen. An diesen beiden Stellen wurde die Kupfer-Konzentration in Gewichtsprozent per EDX bestimmt und die in Bereich A bestimmte Konzentration durch die in Bereich B bestimmte Konzentration dividiert.
Analog wurde diese Prozedur an weiteren TEM-Aufnahmen von Zeolith-Kristalliten mit Aluminiumoxid-Hülle durchgeführt, um eine statistische Auswertung zu ermöglichen. In allen Fällen wurde festgestellt, dass die Konzentration an Kupfer im Bereich der Aluminiumoxidhülle deutlich höher war als auf dem Zeolithen, wie der folgenden Tabelle entnommen werden kann.

|         | Konzentration Cu auf dem $Al_2O_3$ [Gew%] geteilt durch Konzentration Cu auf dem Zeolithen [Gew%] gemäß TEM/EDX |
|---------|---------------------------------------------------------------------------------------------------------------------------------|
| Probe 1 | 1,9 |
| Probe 2 | 2,6 |
| Probe 3 | 2,2 |

**Vergleichsbeispiel 1: Herstellung eines Vergleichsmaterials EM-1**

Das Vergleichsmaterial EM-1 wurde gemäß WO 2018/029328 A1 hergestellt.

a) Präparation des Vergleichsmaterials EM-1
100,4 Gramm Kupfer(II)-acetat-1-hydrat und 960 Gramm Ammonium-chabazit mit einem $SiO_2/Al_2O_3$-Verhältnis von 30 werden in 2500 Gramm Wasser aufgeschlämmt. Die erhaltene Suspension wird für 2 Stunden gerührt. Anschließend werden 400 Gramm eines Boehmit-Sols mit einem Gehalt von 20 Gewichtsprozent $Al_2O_3$ zugesetzt. Danach wird wieder für 2 Stunden gerührt.
Die fertige Suspension wird in einem Sprühtrockner in ein trockenes Pulver überführt, welches anschließend für 2 Stunden bei 500°C unter Luft kalziniert wird.

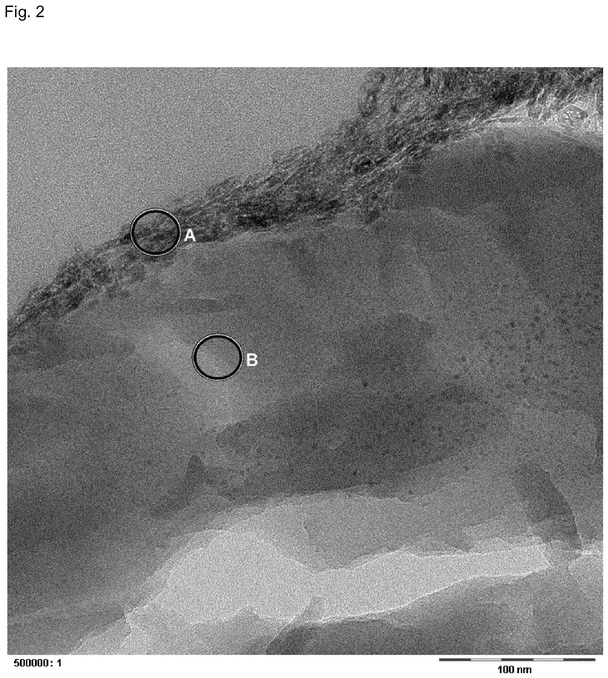

b) Charakterisierung der Cu-Verteilung von EM-1 zwischen Zeolith und Aluminiumoxid Das gemäß Schritt a) erhaltene Material EM-1 wird fein verteilt in ein Polymerharz eingebettet. Dann werden Dünnschnitt-Proben angefertigt und im Transmissionselektronenmikroskop untersucht. Ein beispielhaftes TEM-Bild des Materials ist in Abbildung 2 dargestellt. Die Bereiche des Aluminiumoxid und des Zeolithen können anhand des per EDX bestimmten Aluminium-Gehalts und anhand der Morphologie deutlich unterschieden werden. Es zeigt einen Ausschnitt eines Zeolithkristalliten mit einer Hülle aus Aluminiumoxid. In der Aufnahme wurden 2 Bereiche markiert, um die Unterschiede zwischen den Aluminiumoxidbereichen (Bereich A) und dem Zeolithbereich (Bereich B) darzustellen. An diesen beiden Stellen wurde die Kupfer-Konzentration in Gewichtsprozent per EDX bestimmt und die in Bereich A bestimmte Konzentration durch die in Bereich B bestimmte Konzentration dividiert.

Analog wurde diese Prozedur an weiteren TEM-Aufnahmen von Zeolith-Kristalliten mit Aluminiumoxid-Hülle durchgeführt, um eine statistische Auswertung zu ermöglichen. In allen Fällen wurde festgestellt, dass die Konzentration an Kupfer im Bereich der Aluminiumoxidhülle deutlich höher war als auf dem Zeolithen, wie der folgenden Tabelle entnommen werden kann.

|  | Konzentration Cu auf dem $Al_2O_3$ [Gew%] geteilt durch Konzentration Cu auf dem Zeolithen [Gew%] gemäß TEM/EDX |
|---|---|
| Probe 1 | 8,7 |
| Probe 2 | 3,2 |
| Probe 3 | 4,8 |

**Ausführungsbeispiel 2: Bestimmung der Konversionsrate**

Zur Bestimmung der katalytischen Wirksamkeit der beschichteten Träger - hier eines beschichteten Filters (Tabelle 2) - werden diese nach dem Kalzinieren für 16 Stunden unter hydrothermalen Bedingungen (10% Wasser) bei 800 °C gealtert und anschließend an einem Modellgasprüfstand hinsichtlich ihrer Aktivität in der selektiven katalytischen Reduktion von $NO_x$ getestet, vorliegend in einem dynamischem, auf einem Ammoniak-Durchbruchskriterium basierenden Test mit den in Tabelle 1 dargestellten Gasbedingungen.

**Tabelle 1: Gaszusammensetzung der Testung der katalytischen Aktivität an einem Modellgasprüfstand bei T = 175 °C, 225 °C, 250 °C und 350 °C.**

| Gas | Anteil |
|---|---|
| $NO_x$ | 500 ppm |
| $NO_2$ | 0 ppm |
| $NH_3$ | 750 ppm |
| $O_2$ | 10 Vol. - % |
| CO | 350 ppm |
| $C_3H_6$ | 100 ppm |
| $H_2O$ | 5 Vol. - % |
| $N_2$ | Rest |

Ein keramischer Filter bestehend aus einem Trägerkörper aus Siliciumcarbid (Fa. NGK) mit einer Porosität von 63% bei einer mittleren Porengröße von 20 $\mu$m in den Abmessungen wurde für die vorliegenden Versuche herangezogen:

**Tabelle 2: Daten des Filterträgers**

| Durchmesser | 165 mm |
|---|---|
| Länge | 140 mm |
| Zelldichte | 300 cpsi |
| Wandstärke | 0,305 mm |

Dieser wird in einer Beschichtungsanlage nach dem in der WO 2006/021338 A1 beschriebenen Verfahren beschichtet. Dazu werden folgende Schritte durchgeführt:

a) senkrechtes Ausrichten der Strömungskanäle des Wandflussfilters, so dass eine Stirnfläche unten und die zweite Stirnfläche oben zu liegen kommt,

b) Einbringen der Beschichtungszusammensetzung in den Filterkörper durch die in der unteren Stirnfläche offenen Strömungskanäle des Wandflussfilters bis zu einer gewünschten Höhe über der unteren Stirnfläche

c) Entfernen überschüssiger Beschichtungszusammensetzung nach unten.

Der Washcoat hat beim Beschichten Raumtemperatur, welche üblicherweise 20°C bis 40°C beträgt, und besteht aus einer Suspension eines kupferausgetauschten Zeolithen (Chabasit) mit einem Feststoffgehalt von 37%. Die Suspension wird in den Beispielen 1 - 3 über eine Rührwerkskugelmühle (z.B. Fa. Netzsch oder Fa. Hosokawa-Alpine) unter Verwendung von Zirkonoxid- Mahlkugeln mit einem Durchmesser von 1 mm gemahlen.

Nach der Beschichtung wird die Beladung des Trägers mit Washcoat durch Wiegung des Trägers bestimmt.

### 2.1. Konversionsrate bei NO-only-Modellgas

Zur Untersuchung der katalytischen Aktivität der hergestellten Katalysatoren wurde ein dynamischer Aktivitätstest in einer Labormodellgasanlage vorgenommen. Dabei wurde die folgende Testgaszusammensetzung eingestellt:

| | Gasmischung 1 | Gasmischung 2 | Gasmischung 3 |
|---|---|---|---|
| $O_2$ [Vol.-%] | 10 | 10 | 10 |
| NO [vppm] | 500 | 500 | 0 |
| $NO_2$ [vppm] | 0 | 0 | 0 |
| $NH_3$ [vppm] | 0 | 750 | 0 |
| CO [ppm] | 350 | 350 | 350 |
| $C_3H_6$ [ppm] | 100 | 100 | 100 |
| $H_2O$ [Vol.-%] | 10 | 10 | 10 |
| $N_2$ | Balance | Balance | Balance |
| Raumgeschwindigkeit [h-1] | 60000 | 60000 | 60000 |

Der Test wurde bei sechs verschiedenen Temperaturen durchgeführt, die auf den anwendungsrelevantesten Zieltemperaturbereich für ein SCR-System, das in einer Abgasanlage anderen Abgasreinigungsaggregaten nachgeschaltet ist, abgestimmt waren, nämlich bei 175°C, 225°C, 250°C, 350°C, 500°C und 650°C. Bei jeder Temperatur wurde ein Zyklus aus vier unterschiedlichen Phasen durchlaufen, die nachfolgend als Phasen A bis D bezeichnet werden:

Phase A: Gasmischung 1; Dauer: 5 Minuten
Phase B, $NH_3$-SCR-Phase: Gasmischung 2; Dauer: bis zu einem $NH_3$- Durchbruch von 20 Vppm oder Abbruch nach Zeit;
Phase C, Gasmischung 3; Leeren des $NH_3$-Speichers durch Temperaturrampe bis 500°C:
Phase D, Gasmischung 3; Einregeln der nächsten Meßtemperatur

Innerhalb eines Zyklus wurde zuerst die Katalysatortemperatur auf die definierte Zieltemperatur eingeregelt. Dann wurde der Katalysator für 5 Minuten mit Gasmischung 1 beaufschlagt (Phase A). In Phase B wurde auf Gasmischung 2 umgeschaltet, um den NH3-SCR-Umsatz zu ermitteln. Diese Phase wurde entweder bei Detektion eines NH3-Durchbruchs von 20 Vppm abgebrochen oder durch ein zuvor festgelegtes Zeitkriterium beendet. Dann wurde Gasmischung 3 eingestellt und der Katalysator auf 500°C aufgeheizt, um den Ammoniakspeicher zu entleeren (Phasen C). Anschließend wurde der Katalysator auf die nächste zu untersuchende Messtemperatur heruntergekühlt (Phasen D), der nächste Zyklus begann mit Phase A durch Einstellen der Gasmischung 1 nach Einregeln der Zieltemperatur.

Es wurde jeweils zur Beurteilung der SCR-Aktivität der untersuchten Materialien in der Phase B der

$$\text{Durchschnittliche Umsatz } Av.X(NOx) \, [\%] = \left(1 - \frac{\bar{c}(NOx)nach \, Kat}{\bar{c}(NOx)vor \, Kat}\right) * 100\%$$

und der

$$\text{maximale Umsatz } Max.X(NOx) \, [\%] = \left(1 - \frac{c(NOx)minimum, nach \, Kat}{\bar{c}(NOx)vor \, Kat}\right) * 100\%$$

und als Funktion der vor Katalysator gemessenen Temperatur aufgetragen.

Für die Messpunkte bei 500 und 650°C wird nur die Phase B angefahren und nur der maximale Umsatz Max. X(NOx) [%] bestimmt.Durchschnittlicher und Maximalumsatz bei Verwendung von NO-only-Modellgas sind nachfolgend für EM-2 und EM-1 dargestellt.

**Tabelle 3: durchschnittlicher und Maximalumsatz für das NO-only-Modellgas:**

|       | Av. X(NO$_x$) / % |       | Max. X(NO$_x$) / % |       |
| ----- | ---- | ---- | ---- | ---- |
| T/°C  | EM-1 | EM-2 | EM-1 | EM-2 |
| 175   | 17   | 18   | 24   | 26   |
| 225   | 30   | 35   | 49   | 55   |
| 250   | 45   | 50   | 65   | 73   |
| 350   | 62   | 65   | 81   | 85   |
| 500   |      |      | 70   | 75   |
| 650   |      |      | 15   | 21   |

Der durchschnittliche Umsatz für das NO-only-Modellgas ist in Fig. 3a und der Maximalumsatz in Fig. 3b dargestellt.

2.2. Konversionsrate bei 25 % NO$_2$-Modellgas

In einer zweiten Versuchsreihe wird der durchschnittliche und maximale NOx-Umsatz bei 25% NO$_2$ im Feedgas bestimmt. Der Ablauf der Messung entspricht dem in 2.1 beschriebenen Ablauf, abweichend von 2.1 werden folgende Gasmischungen für die verschiedenen Phasen verwendet:

**Tabelle 4: Konversionsrate bei 25% NO$_2$-Modellgas**

|                            | Gasmischung 1 | Gasmischung 2 | Gasmischung 3 |
| -------------------------- | ------------- | ------------- | ------------- |
| O$_2$ [Vol.-%]             | 10            | 10            | 10            |
| NO [vppm]                  | 375           | 375           | 0             |
| NO$_2$ [vppm]              | 125           | 125           | 0             |
| NH$_3$ [vppm]              | 0             | 750           | 0             |
| CO [ppm]                   | 350           | 350           | 350           |
| C$_3$H$_6$ [ppm]           | 100           | 100           | 100           |
| H$_2$O [Vol.-%]            | 10            | 10            | 10            |
| N$_2$                      | Balance       | Balance       | Balance       |
| Raumgeschwindigkeit [h-1]  | 60000         | 60000         | 60000         |

Durchschnittlicher und Maximalumsatz bei Verwendung von 25% NO$_2$-Modellgas sind nachfolgend für EM-2 und EM-1 dargestellt.

**Tabelle 5: durchschnittlicher und Maximalumsatz bei Verwendung von 25% NO$_2$-Modellgas**

|       | Av. X(NO$_2$) / % |       | Max. X(NO$_2$) / % |       |
| ----- | ---- | ---- | ---- | ---- |
| T/°C  | EM-1 | EM-2 | EM-1 | EM-2 |
| 175   | 6    | 32   | 41   | 50   |
| 225   | 51   | 56   | 68   | 72   |
| 250   | 62   | 68   | 77   | 81   |
| 350   | 71   | 75   | 85   | 90   |

(fortgesetzt)

| T/°C | Av. X(NO$_2$) / % | | Max. X(NO$_2$) / % | |
|---|---|---|---|---|
| | EM-1 | EM-2 | EM-1 | EM-2 |
| 500 | | | 70 | 75 |
| 650 | | | 20 | 24 |

Der durchschnittliche Umsatz für das Modellgas mit 25% NO$_2$ ist in Fig. 4a und der Maximalumsatz in Fig. 4b dargestellt.

<u>2.3. Konversionsrate bei verschiedenen Ammoniakschlupfraten</u>

Die NO$_x$-Konversionsraten von EM-1 und EM2 wurden an einem Motorprüfstand bestimmt. Es wurde ein Versuchspunkt mit einer Temperatur von 650°C und einem Abgasmassenstrom von 500 kg/h gewählt. Die Konzentration an NOx im Abgas betrug 500 ppm. Das Verhältnis von dosiertem NH$_3$ zu NOx im Feedgas (alpha) wurde in einem Bereich von 0.5 bis 4.0 variiert.

| Alpha (NH$_3$/NO$_x$) | X(NO$_x$) / % | | NH$_3$-Schlupf / ppm | |
|---|---|---|---|---|
| | EM-1 | EM-2 | EM-1 | EM-2 |
| 0,5 | 11 | 19 | 0 | 0 |
| 1 | 20 | 31 | 20 | 35 |
| 2 | 30 | 49 | 85 | 120 |
| 3 | 40 | 59 | 205 | 290 |
| 4 | 42 | 62 | 340 | 415 |

Die NO$_x$-Konversionsraten bei verschiedenen alpha-Werten sind in Fig. 5a und die zugehörigen Ammoniakschlupfwerte in Fig. 5b dargestellt.

**Patentansprüche**

1. SCR-aktives Material, das einen

   (i) kleinporigen Zeoliten
   (ii) Aluminiumoxid und
   (iii) Kupfer umfasst,

   **dadurch gekennzeichnet, dass** es bezogen auf das gesamte Material 5 bis 7 Gew.-% Aluminiumoxid enthält und das Kupfer, berechnet als CuO, auf dem Aluminiumoxid in einer ersten Konzentration und auf dem kleinporigen Zeoliten in einer zweiten Konzentration vorliegt wobei sowohl die erste als auch die zweite Konzentration des Kupfers größer als Null sind.

2. SCR-aktives Material gemäß Anspruch 1, **dadurch gekennzeichnet, dass** die Gesamtmenge an Kupfer, berechnet als CuO und bezogen auf das gesamte SCR-aktive Material, 1 bis 3,5 Gew.-% beträgt.

3. SCR-aktives Material gemäße Anspruch 1 und/oder 2, **dadurch gekennzeichnet, dass** die erste Konzentration höher ist als die zweite Konzentration.

4. SCR-aktives Material gemäß einem oder mehreren der Ansprüche 1 bis 3, **dadurch gekennzeichnet, dass** die erste Konzentration mindestens 1,5 Mal höher ist als die zweite Konzentration.

5. SCR-aktives Material gemäß einem oder mehreren der Ansprüche 1 bis 4, **dadurch gekennzeichnet, dass** das Atomverhältnis vom im Zeolithen eingetauschten Kupfer zu Aluminium im Zeolithen bei 0,25-0,6 liegt.

6. SCR-aktives Material gemäß einem oder mehreren der Ansprüche 1 bis 5, **dadurch gekennzeichnet, dass** der kleinporige Zeolith ein Aluminosilikat ist und dem Strukturtyp AEI, CHA (Chabazit), ERI (Erionit), LEV (Levyne), AFX, DDR oder KFI angehört.

7. SCR-aktives Material gemäß Anspruch 6, **dadurch gekennzeichnet, dass** der kleinporige Zeolith einen SAR-Wert von 5 bis 50 aufweist.

8. SCR-aktives Material gemäß einem oder mehreren der Ansprüche 1 bis 4, **dadurch gekennzeichnet, dass** der kleinporige Zeolith ein Silicoaluminophosphat oder ein Aluminophosphat ist und dem Strukturtyp AEI, CHA (Chabazit), ERI (Erionit), LEV (Levyne), AFX, DDR oder KFI angehört.

9. SCR-aktives Material gemäß einem oder mehreren der Ansprüche 1 bis 8, **dadurch gekennzeichnet, dass** die mittlere Kristallitgröße (d50) des kleinporigen Zeolithen 0,1 bis 20 $\mu$m beträgt.

10. SCR-aktives Material gemäß einem der Ansprüche 1 bis 9, **dadurch gekennzeichnet, dass** der kleinporige Zeolith einen Kern und das Aluminiumoxid eine diesen Kern umhüllende Schale bildet.

11. SCR-aktives Material gemäß einem oder mehreren der Ansprüche 1 bis 10, **dadurch gekennzeichnet, dass** es in Pulverform vorliegt.

12. SCR-aktives Material gemäß einem oder mehreren der Ansprüche 1 bis 10, **dadurch gekennzeichnet, dass** es in Form einer Beschichtung auf einem Trägersubstrat vorliegt oder dass es mittels einer Matrixkomponente zu einem Substrat extrudiert wurde.

13. SCR-aktives Material gemäß Anspruch 12, **dadurch gekennzeichnet, dass** es in Form einer Beschichtung auf einem Trägersubstrat vorliegt, wobei es sich bei dem Trägersubstrat um ein gewelltes katalytisches Substrat (corrugated substrate) handelt.

14. SCR-aktives Material gemäß einem oder mehreren der Ansprüche 1 bis 10, **dadurch gekennzeichnet, dass** es in Form einer Beschichtungssuspension vorliegt, die

a) ein SCR-aktives Material, das einen

(i) kleinporigen Zeolithen,
(ii) Aluminiumoxid und
(iii) Kupfer umfasst,

wobei es bezogen auf das gesamte Material 5 bis 7 Gew.-% Aluminiumoxid enthält und das Kupfer, berechnet als CuO, auf dem Aluminiumoxid in einer ersten Konzentration und auf dem kleinporigen Zeolithen in einer zweiten Konzentration vorliegt, wobei sowohl die erste als auch die zweite Konzentration des Kupfers größer als Null sind, und
b) Wasser
umfasst.

15. Verfahren zur Reinigung von Abgas von mager betriebenen Verbrennungsmotoren, **dadurch gekennzeichnet, dass** das Abgas über ein SCR-aktives Material gemäß einem oder mehreren der Ansprüche 1 bis 13 geleitet wird.

16. Verfahren zur Reinigung von Abgas von mager betriebenen Verbrennungsmotoren, **dadurch gekennzeichnet, dass** es ein SCR-aktives Material gemäß einem der Ansprüche 1 bis 13 sowie ein Mittel zur Bereitstellung eines Reduktionsmittels umfasst.

17. Vorrichtung gemäß Anspruch 16, **dadurch gekennzeichnet, dass** das Mittel zur Bereitstellung eines Reduktionsmittels ein Injektor für wässrige Harnstofflösung ist.

18. Vorrichtung gemäß einem der Ansprüche 16 bis 17, **dadurch gekennzeichnet, dass** sie einen Oxidationskatalysator umfasst.

19. Vorrichtung gemäß Anspruch 16, **dadurch gekennzeichnet, dass** das Mittel zur Bereitstellung eines Reduktionsmittels ein Stickoxid-Speicherkatalysator ist.

20. Verfahren zur Herstellung des SCR-aktiven Materials gemäß einem oder mehreren der Ansprüche 1 bis 11, **dadurch gekennzeichnet, dass** eine wässrige Suspension aus kleinporigem Zeolith, Kupfersalz und Aluminiumoxid bzw. einer Vorläuferverbindung von Aluminiumoxid getrocknet und anschließend kalziniert wird.

21. Verfahren nach Anspruch 20, **dadurch gekennzeichnet, dass** es sich bei der Trocknung um Sprühtrocknung handelt.

22. Verfahren gemäß Anspruch 20 und/oder 21, **dadurch gekennzeichnet, dass** die Kalzinierung in Luft oder in einer Luft/Wasser-Atmosphäre bei Temperaturen zwischen 500°C und 900°C stattfindet.

Fig. 1:

Fig. 2

Fig. 3a

Fig. 3b

Fig. 4a

**Durchschnittlicher Umsatz Modellgas mit 25% NO$_2$**

Fig. 4b

**Maximal-Umsatz Modellgas mit 25% NO$_2$**

Fig. 5

NO$_x$-Konversion in Abhängigkeit von alpha

Fig. 5b

Ammoniakschlupf in Abhängigkeit von alpha

Europäisches Patentamt
European Patent Office
Office européen des brevets

# EUROPÄISCHER RECHERCHENBERICHT

Nummer der Anmeldung

EP 19 19 6384

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br>Y | WO 2018/029328 A1 (UMICORE AG & CO KG [DE]) 15. Februar 2018 (2018-02-15)<br>* Zusammenfassung *<br>* Seite 3, Absatz 4 *<br>* Seite 4, Absatz 3-4 *<br>* Seite 5, Absätze 2, 4 *<br>* Seite 6 *<br>* Seite 7, Absätze 1, 4, 5 *<br>* Seiten 8-9 *<br>* Seite 10, Absatz 1-2 *<br>* Seite 11, Absatz 3 - Seite 14, Absatz 2 *<br>* Beispiele 1-2 "EM-1"" * | 1-22<br><br>5,9,10 | INV.<br>B01J29/76<br>B01J35/00<br>B01J35/02<br>B01J37/00<br>B01J37/02<br>B01J29/56<br>B01J29/83<br>B01J29/85<br>B01D53/94<br><br>ADD.<br>B01J35/04<br>B01J37/08 |
| X<br>Y | WO 2018/029329 A1 (UMICORE AG & CO KG [DE]) 15. Februar 2018 (2018-02-15)<br>* Zusammenfassung *<br>* Seite 1, Zeilen 1-4 *<br>* Seite 3, Zeile 4. Abs. *<br>* Seite 4, Zeilen 15-32 *<br>* Seite 5, Zeilen 13-28 *<br>* Seite 6, Zeilen 7-28 *<br>* Seite 7, Zeile 15 - Seite 9, Zeile 10 *<br>* Seite 11, Zeilen 4-10 *<br>* Seite 12, Zeilen 8-12, 31 - Seite 14, Zeile 17 *<br>* Beispiele Vgls.bsp. 2, "VK-2"; Bsp. 2, "EK-5"; Tabelle 1 * | 1-22<br><br>5,9,10 | |
| X<br><br>Y | US 2018/297014 A1 (MOHANAN JAYA L [US] ET AL) 18. Oktober 2018 (2018-10-18)<br>* Zusammenfassung *<br>* Absätze [0002], [0013] - [0021], [0087] - [0089], [0094] - [0095], [0097] - [0099], [0122], [0124], [0131] - [0132] *<br>* Absätze [0141] - [0144]; Abbildung 14; Beispiel 6 * | 1-4,6-8,<br>11-22<br>5,9,10 | RECHERCHIERTE SACHGEBIETE (IPC)<br><br>B01J<br>B01D |

-/--

Der vorliegende Recherchenbericht wurde für alle Patentansprüche erstellt

| Recherchenort | Abschlußdatum der Recherche | Prüfer |
|---|---|---|
| München | 26. Februar 2020 | Schön, Anke |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 19 19 6384

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2019/226372 A1 (PRICE KENNETH SHERWOOD [US] ET AL) 25. Juli 2019 (2019-07-25) * Zusammenfassung * * Absätze [0001], [0015] - [0018], [0022] - [0027], [0033] - [0037], [0051] - [0059] * ----- | 1-22 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 26. Februar 2020 | Schön, Anke |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................................................
& : Mitglied der gleichen Patentfamilie, übereinstimmendes
    Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 19 19 6384

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2020

| Im Recherchenbericht angeführtes Patentdokument | Datum der Veröffentlichung | Mitglied(er) der Patentfamilie | Datum der Veröffentlichung |
|---|---|---|---|
| WO 2018029328 A1 | 15-02-2018 | CN 109562364 A | 02-04-2019 |
| | | EP 3281698 A1 | 14-02-2018 |
| | | EP 3496852 A1 | 19-06-2019 |
| | | JP 2019531874 A | 07-11-2019 |
| | | KR 20190039550 A | 12-04-2019 |
| | | US 2019184338 A1 | 20-06-2019 |
| | | WO 2018029328 A1 | 15-02-2018 |
| WO 2018029329 A1 | 15-02-2018 | CN 109562366 A | 02-04-2019 |
| | | EP 3496854 A1 | 19-06-2019 |
| | | US 2019176087 A1 | 13-06-2019 |
| | | WO 2018029329 A1 | 15-02-2018 |
| US 2018297014 A1 | 18-10-2018 | BR 112018009908 A2 | 13-11-2018 |
| | | CA 3005574 A1 | 26-05-2017 |
| | | CN 108472638 A | 31-08-2018 |
| | | EP 3377220 A1 | 26-09-2018 |
| | | JP 2019502550 A | 31-01-2019 |
| | | KR 20180071384 A | 27-06-2018 |
| | | RU 2018121814 A | 19-12-2019 |
| | | US 2018297014 A1 | 18-10-2018 |
| | | WO 2017085646 A1 | 26-05-2017 |
| US 2019226372 A1 | 25-07-2019 | US 2019226372 A1 | 25-07-2019 |
| | | WO 2019145198 A1 | 01-08-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008106519 A1
- WO 2008118434 A1
- WO 2008132452 A2
- WO 2013060341 A1
- JP 2012215166 A
- EP 2985068 A1

- US 20150037233 A1
- WO 2018029328 A1
- WO 2012117042 A2
- WO 2010066345 A1
- WO 2006021338 A1

**In der Beschreibung aufgeführte Nicht-Patentliteratur**

- **JH KWAK ; R TONKYN ; D TRAN ; D MEI ; SJ CHO ; L KOVARIK ; JH LEE ; CHF PEDEN ; J SZANYI.** Size-Dependent Catalytic Performance of CuO on g-Al2O3: NO Reduction versus NH3 Oxidation. *ACS Catal,* 2012, vol. 2, 1432-1440
- Urea-SCR Technology for deNOx After Treatment of Diesel Exhausts. Springer-Verlag, 2014, 206-208
- UREA-SCR TECHNOLOGY FOR DENOX AFTER TREATMENT OF DIESEL EXHAUSTS. 365-369

- **C TORRE-ABREU ; C HENRIQUES ; FR RIBEIRO ; G DELAHAY ; MF RIBEIRO.** Selective catalytic reduction of NO on copper-exchanged zeolites: the role of the structure of the zeolite in the nature of copper-active sites. *Catal Today,* 1999, vol. 54, 407-418
- **ST KORHONEN ; DW FICKEL ; RF LOBO ; BM WECKHUYSEN ; AM BEALE.** Isolated Cu2+ ions: active sites for selective catalytic reduction of NO. *Chem Commun,* 2011, vol. 47, 800-802
- **Q GUO ; F FAN ; DAJ MICHEL LIGTHART ; G LI ; Z FENG ; EJM HENSEN ; C LI.** Effect of the Nature and Location of Copper Species on the Catalytic Nitric Oxide Selective Catalytic Reduction Performance of the Copper/SS-13 Zeolite. *ChemCatChem,* 2014, vol. 4, 634-639